# FASCICULE DE BREVET EUROPEEN

(11) **EP 2 250 742 B1**
(45) Date de publication et mention de la délivrance du brevet: **24.10.2012**
(21) Numéro de dépôt: 09721043.9
(22) Date de dépôt: 19.02.2009
(51) Int. Cl.: H04B 7/204, H04B 7/185

(54) **Système de formation de faisceaux à traitement fait au sol et à transmission numérique.**
System zur Strahlenerzeugung mit bodenbetriebener Verarbeitung und digitaler Übertragung.
System for generating beams with ground-operated processing and digital transmission.

(30) Priorité: 04.03.2008 FR 0801185
(43) Date de publication de la demande: 17.11.2010
(73) Titulaire: THALES, 92200 Neuilly-sur-Seine (FR)
(72) Inventeur: GAYRARD, Jean-Didier, 31270 Cugnaux (FR); GUIRAUD, Cécile, F-31120 Goyrans (FR); BURET, Isabelle, F-31830 Plaisance du Touch (FR)
(74) Mandataire: Brunelli, Gérald
(86) Numéro de dépôt international: PCT/EP2009/052001
(87) Numéro de publication internationale: WO 2009/112336

(56) Documents cités:
- EP-A- 0 860 952
- WO-A-00/59135
- GB-A- 2 318 947
- US-A1- 2008 051 080

## Description

L'invention concerne un système de formation de faisceaux à traitement fait au sol ("Ground Based BeamForming" ou "GBBF" en langue anglaise).

L'expression formation de faisceaux concerne la fonction accomplie par un système dans lequel l'énergie rayonnée par une antenne à éléments rayonnants est focalisée dans une direction spécifique. L'objectif est également de recevoir préférentiellement des signaux d'une direction particulière ou d'émettre préférentiellement des signaux dans une direction particulière. De tels systèmes sont généralement utilisés pour des terminaux distants tels des téléphones portables ou décodeurs numériques. La formation de faisceaux peut être effectuée dans le satellite ou dans une station de base située au sol.

La présente invention concerne un système de formation de faisceaux à traitement fait au sol, la formation de faisceaux étant effectuée par la station de base. Effectuer la formation de faisceaux au sol procure divers avantages. Tout d'abord, la charge embarquée à bord du satellite est diminuée, car les dispositifs de formation de faisceaux ("beamformers" en langue anglaise) sont disposés dans la station de base au sol et non dans le satellite. Le coût est également réduit, car les dispositifs de formations de faisceaux utilisés n'ont pas besoin de réaliser des contraintes techniques, par exemple de taille ou de masse, nécessaires à leur embarquement à bord d'un satellite. Enfin, la formation de faisceau au sol permet une flexibilité d'utilisation et une évolution du système nettement supérieure à une formation de faisceaux effectuée dans le satellite. En effet, pendant la durée de fonctionnement du satellite, typiquement de l'ordre de dix ans, le nombre de dispositifs de formation de faisceaux peut être aisément augmenté si la demande croît, et des dispositifs de formation de faisceaux ou de traitement connexes peuvent aisément être changés ou mis à jour en fonctions des progrès techniques.

Toutefois, dans les systèmes de formation de faisceaux à traitement fait au sol, il est difficile d'obtenir au sol une copie fidèle des signaux reçus par le satellite à partir de terminaux distants, et transmis par le satellite à la station de base au sol. De même, de manière duale, il est difficile d'obtenir dans le satellite une copie fidèle des signaux émis par la station de base. voir GB-A- 2 318 947 (Motorola).

Un but de l'invention est de pallier à ces inconvénients.

Il est proposé, selon un aspect de l'invention, un système de formation de faisceaux à traitement fait au sol comprenant un satellite et une base de traitement au sol équipée de moyens de formation de faisceaux, ledit satellite étant équipé de premiers moyens d'émission/réception pour émettre et recevoir des signaux analogiques avec des terminaux distants , et de deuxièmes moyens d'émission/réception pour émettre et recevoir des signaux avec des troisièmes moyens d'émission/réception au sol communiquant avec ladite base de traitement.

Le satellite comprend :
- des moyens de numérisation adaptés pour convertir des signaux analogiques reçus par les premiers moyens d'émission/réception en des signaux numériques, lesdits moyens de numérisation étant directement reliés aux premiers moyens d'émission/réception et
- des moyens de traitement numérique directement reliés aux moyens de numérisation,
et en ce que la base de traitement comprend des moyens de formation de faisceaux et des moyens de traitement reliés auxdits troisièmes moyens d'émission/réception.

Le fait de numériser les signaux au plus proche de la source de réception des signaux analogiques émis par des terminaux distants permet d'éviter une dégradation des signaux entre leur réception et leur numérisation dans le satellite.

Dans un mode de réalisation, lesdits deuxièmes et troisièmes moyens d'émission/réception sont adaptés pour communiquer par signaux numériques.

Un tel système permet de limiter sensiblement les différences entre les signaux reçus par le satellite en provenance des terminaux distants, et les signaux reçus par la station de base au sol après transmission par le satellite. En effet, une transmission de signaux sous forme numérique permet de diminuer de manière significative le taux d'erreur de transmission par rapport aux transmissions analogiques.

En outre, lors d'une transmission de signaux sous forme numérique, l'ajout de bruit est sensiblement limité en comparaison à une transmission de signaux analogiques.

Dans un mode de réalisation, les moyens de traitement numérique du satellite comprennent des moyens de filtrage numérique adaptés pour filtrer des signaux numériques.

Un tel filtrage permet d'améliorer la qualité des signaux.

Dans un mode de réalisation, les moyens de traitement numérique du satellite comprennent des moyens de compression pour compresser des signaux numériques.

Cette compression de données permet de limiter la bande passante nécessaire à la transmission des signaux.

Dans un mode de réalisation, les moyens de traitement numérique du satellite comprennent des moyens d'ajout d'informations de multiplexage temporel aux signaux numérisés, et des moyens de multiplexage temporel de signaux numériques.

Ainsi on peut effectuer un multiplexage temporel des signaux en ajoutant des informations permettant de réaliser un démultiplexage correspondant lors de leur réception au sol.

Dans un mode de réalisation, les moyens de traitement de la base de traitement au sol comprennent des moyens de démultiplexage de signaux numériques.

Dans un mode de réalisation, lesdits moyens de traitement de la base de traitement au sol comprennent des moyens de décompression des signaux numériques.

Dans un mode de réalisation, lesdits deuxièmes moyens d'émission/réception comprennent, en outre, un modulateur pour moduler les signaux numériques.

Dans un mode de réalisation, le système comprend un démodulateur au sol pour démoduler les signaux numériques reçus du satellite.

On récupère ainsi le signal d'origine.

Selon un autre aspect de l'invention, il est également proposé un système de formation de faisceaux à traitement fait au sol comprenant un satellite et une base de traitement au sol équipée de moyens de formation de faisceaux, ledit satellite étant équipé de premiers moyens d'émission/réception pour émettre et recevoir des signaux analogiques avec des terminaux distants, et de deuxièmes moyens d'émission/réception pour émettre et recevoir des signaux avec des troisièmes moyens d'émission/réception au sol communiquant avec ladite base de traitement. Le satellite comprend :
- des moyens de conversion adaptés pour convertir des signaux numériques reçus par les deuxièmes moyens d'émission/réception en des signaux analogiques, lesdits moyens de conversion étant directement reliés aux premiers moyens d'émission/réception, et
- des moyens de traitement numérique directement reliés aux moyens de conversion,
et en ce que la base de traitement comprend des moyens de formation de faisceaux et des moyens de traitement reliés auxdits troisièmes moyens d'émission/réception au sol.

Ainsi, les signaux numériques reçus de la station de base au sol par le satellite sont convertis en signaux analogiques au plus près de la source d'émission des signaux analogiques du satellite, ce qui évite une dégradation des signaux entre leur conversion analogique et leur émission vers les terminaux distants.

Dans un mode de réalisation, lesdits deuxièmes et troisièmes moyens d'émission/réception sont adaptés pour communiquer par signaux numériques.

Un tel système permet de limiter sensiblement les différences entre les signaux émis par la station de base au sol reçus par le satellite et les signaux transmis par le satellite aux terminaux distants. En effet, une transmission de signaux sous forme numérique permet de diminuer de manière significative le taux d'erreur de transmission par rapport aux transmissions analogiques actuelles.

En outre, lors d'une transmission de signaux sous forme numérique, l'ajout de bruit est sensiblement limité en comparaison à une transmission de signaux analogiques.

Dans un mode de réalisation, les moyens de traitement de la base de traitement au sol comprennent des moyens de filtrage numérique adaptés pour filtrer des signaux numériques.

La qualité des signaux est ainsi améliorée.

Dans un mode de réalisation, les moyens de traitement de la base de traitement au sol comprennent des moyens de compression pour compresser des signaux numériques.

Cette compression de données permet de limiter la bande passante nécessaire à la transmission des signaux.

Dans un mode de réalisation, les moyens de traitement de la base de traitement au sol comprennent des moyens d'ajout d'informations de multiplexage temporel aux signaux numérisés, et des moyens de multiplexage temporel de signaux numériques.

Il est ainsi possible d'effectuer un multiplexage temporel des signaux en ajoutant des informations permettant de réaliser un démultiplexage correspondant lors de leur réception par le satellite.

Dans un mode de réalisation, les moyens de traitement numérique du satellite comprennent des moyens de démultiplexage de signaux numériques.

Dans un mode de réalisation les moyens de traitement numérique du satellite comprennent des moyens de décompression des signaux numériques.

Dans un mode de réalisation, les troisièmes moyens d'émission/réception au sol comprennent un modulateur pour moduler les signaux numériques.

Dans un mode de réalisation, lequel lesdits deuxièmes moyens d'émission/réception comprennent un démodulateur pour démoduler les signaux numériques reçus de la base de traitement au sol.

Ainsi on retrouve le signal initial.

Dans un mode de réalisation, lesdits terminaux distants comprennent des téléphones portables ou des terminaux de télévision numérique.

Selon un autre aspect de l'invention, il est également proposé un procédé de formation de faisceaux à traitement fait au sol dans lequel on convertit en signaux numériques des signaux analogiques reçus par un satellite après émission par des terminaux distants, ladite conversion ayant lieu avant tout traitement ultérieur des signaux reçus.

Selon un autre aspect de l'invention, il est également proposé un procédé de formation de faisceaux à traitement fait au sol dans lequel on convertit en signaux analogiques des signaux numériques reçus par un satellite après émission par une base de traitement au sol, ladite conversion ayant lieu directement avant l'émission des signaux vers des terminaux distants.

L'invention sera mieux comprise à l'étude de quelques modes de réalisation décrits à titre d'exemples nullement limitatifs et illustrés par les dessins annexés sur lesquels :
- La figure 1 illustre schématiquement un système de formation de faisceaux à traitement fait au sol, selon un premier aspect de l'invention (en réception de signaux de terminaux distants par un satellite avec transmission de ces signaux vers la base de traitement au sol) ; et
- La figure 2 illustre schématiquement un système de formation de faisceaux à traitement fait au sol, selon un deuxième aspect de l'invention (en réception par un satellite de signaux de la base de traitement au sol avec émission de ces signaux vers les terminaux distants).

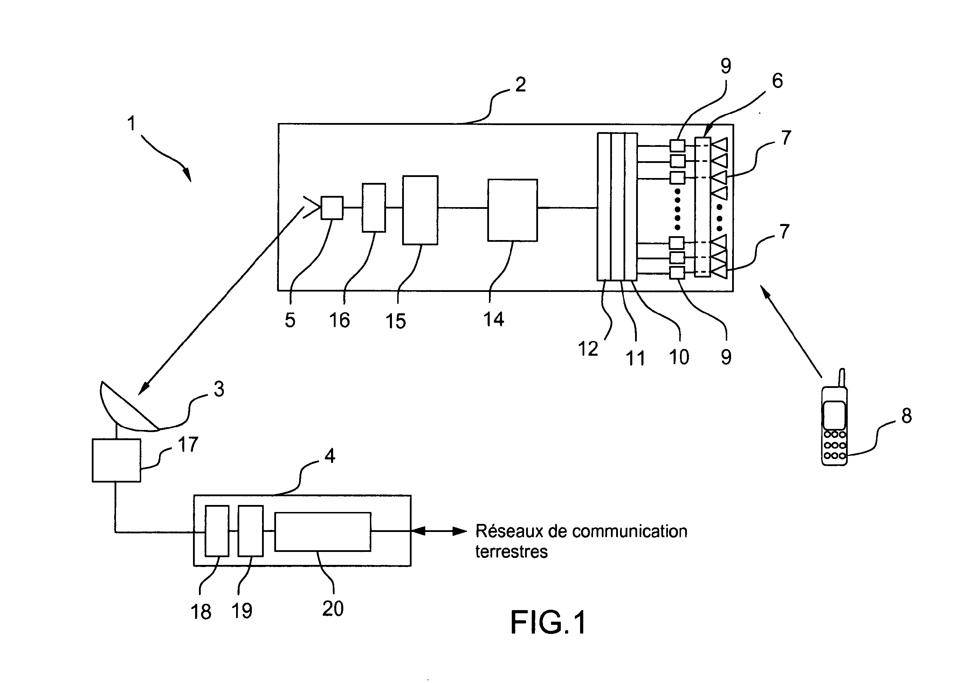

Tel qu'illustré sur la figure 1, un système 1 de formation de faisceaux à traitement fait au sol comprend un satellite 2, une antenne 3 d'émission/réception au sol, et une base de traitement au sol 4. Bien entendu, les réception/émission au sol peuvent, en variante, être effectuées par une pluralité d'antennes d'émission/réception, toutes communiquant avec la base 4. Dans la suite de la description nous considérons, de manière non limitative, que les communications entre le satellite 2 et la station de base 4 est faite par un seul élément d'émission/réception 5 du satellite 2 et une seule antenne 3 d'émission/réception au sol.

Le satellite 2 comprend une antenne 6 à éléments rayonnants 7 transmettant chacun les signaux analogiques qu'ils reçoivent de terminaux distants, tel des téléphones portables 8. En variante, l'invention s'applique à d'autres types de terminaux distants, par exemple, des terminaux de télévision numérique. L'antenne 6 peut être munie de filtres anti-redressement associés aux éléments rayonnants 7. Des modules de numérisation 9 sont directement reliés à l'antenne 6 pour convertir les signaux analogiques respectifs reçus par les éléments rayonnants 7 en signaux numériques, afin de les transmettre à un module 10 d'ajout d'information ("framer" en langue anglaise) permettant à un multiplexeur temporel 11 de multiplexer l'ensemble des signaux reçus des modules de numérisation 9.

Ces signaux peuvent ensuite être filtrés par des filtres numériques optionnels 12 et compressés par un module de compression optionnel 13, afin respectivement d'améliorer la qualité des signaux obtenus et de limiter la bande passante nécessaire. Le satellite 2 comprend également un modulateur 14 pour moduler les signaux numériques afin de les transmettre sur une porteuse. Le satellite 2 comprend également un module 15 de changement de fréquence et un amplificateur 16 pour amplifier les signaux numériques à transmettre par l'élément d'émission/réception 5.

L'antenne 3 reçoit les signaux numériques transmis par le satellite 2 et les transmet à un démodulateur 17 pour les démoduler. Les signaux démodulés sont transmis à la base 4 qui comprend un module de décompression optionnel 18 si le signal a été compressé dans le satellite 2, et un démultiplexeur 19 qui délivre en sortie des signaux numériques correspondants aux signaux numérisés dans le satellite 2 dès réception, à un module de traitement 20 pouvant mettre en oeuvre la formation de faisceaux et éventuellement des traitements additionnels.

La figure 1 illustre la réception de signaux de terminaux distants 8 par le satellite 2 avec transmission de ces signaux vers la base de traitement au sol 4.

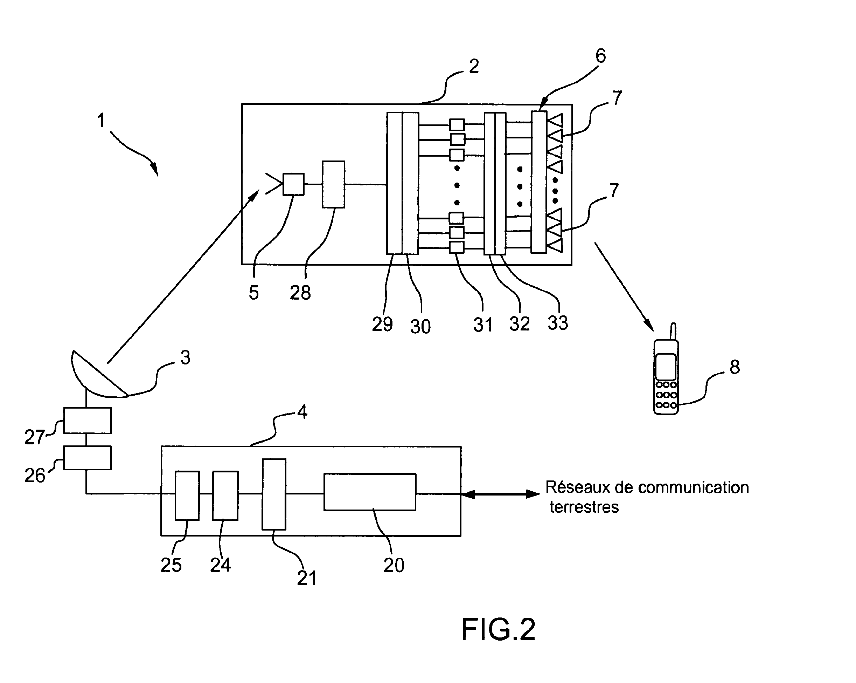

La figure 2 illustre un système dual de celui de la figure 1, avec réception par le satellite 2 de signaux de la base 4 de traitement au sol avec émission de ces signaux vers les terminaux distants 8. Les éléments identiques à ceux de la figure 1 ont les références numériques identiques.

Tel qu'illustré sur la figure 2, un système 1 de formation de faisceaux à traitement fait au sol comprend un satellite 2, une antenne 3 d'émission/réception au sol, et une base de traitement au sol 4. Les communications entre le satellite 2 et la station de base 4 est, par exemple, faite par un seul élément d'émission/réception 5 du satellite 2 et une seule antenne 3 d'émission/réception au sol.

Le module de traitement 20 de formation de faisceaux de la base 4 délivre des signaux numériques à un module 21 d'ajout d'information ("framer" en langue anglaise) permettant à un multiplexeur temporel 22 de multiplexer ces signaux. Ces signaux peuvent ensuite être filtrés par des filtres numériques optionnels 23 et compressés par un module de compression optionnel 24, afin respectivement d'améliorer la qualité des signaux obtenus et de limiter la bande passante nécessaire. Le traitement au sol comprend également, en sortie de la station de base 4 un modulateur 25 pour moduler les signaux numériques afin de les transmettre sur une porteuse, un module 26 de changement de fréquence et un amplificateur 27 pour amplifier les signaux numériques à transmettre par l'antenne 3 d'émission/réception au sol au satellite 2.

L' élément d'émission/réception 5 du satellite 2 reçoit ces signaux et les transmets à un démodulateur 28 qui les démodule. Les signaux démodulés peuvent ensuite, de manière optionnelle être décompressés par un module de décompression optionnel 29, et démultiplexés par un démultiplexeur 30, qui délivre en sortie un ensemble de signaux démultiplexés. Les signaux démultiplexés sont alors convertis en signaux analogiques par des convertisseurs 31, puis modifiés en fréquence par un module 32 de changement de fréquence et amplifiés par un amplificateur 33 afin d'être émis, sous forme analogique, par l'antenne 6 à éléments rayonnants 7 vers les terminaux distants 8. Les éléments 6, 7, 32, 33 forment une antenne active en émission et/ou réception.

La figure 2 illustre la réception de signaux de la base de traitement 4 par le satellite 2 avec transmission de ces signaux vers les terminaux distants 8.

Bien entendu, dans un autre mode de réalisation, un système de formation de faisceaux avec traitement fait au sol peut contenir à la fois les éléments du mode de réalisation de la figure 1 et les éléments du mode de réalisation de la figure 2.

La présente invention permet la formation de faisceaux à traitement fait au sol permettant de limiter les dégradations des signaux transmis au sol. En outre, avec l'utilisation d'un format numérique, l'évolution des traitements numériques permettra de réduire la consommation et minimiser l'encombrement.

## Revendications

1. Système de formation de faisceaux à traitement fait au sol (1) comprenant un satellite (2) et une base de traitement au sol (4) équipée de moyens de formation de faisceaux (20), ledit satellite (2) étant équipé de premiers moyens d'émission/réception (6, 7) pour émettre et recevoir des signaux analogiques avec des terminaux distants (8), et de deuxièmes moyens d'émission/réception (5, 14, 15, 16) pour émettre et recevoir des signaux avec des troisièmes moyens d'émission/réception (3, 17) au sol communiquant avec ladite base de traitement (4), **caractérisé en ce que** :
le satellite (2) comprend :
- des moyens de numérisation (9) adaptés pour convertir des signaux analogiques reçus par les premiers moyens d'émission/réception (6, 7) en des signaux numériques, lesdits moyens de numérisation (9) étant directement reliés aux premiers moyens d'émission/réception (6, 7), et
- des moyens de traitement numérique (10, 11, 12, 13) directement reliés aux moyens de numérisation (9),
et **en ce que** la base de traitement (4) comprend des moyens de formation de faisceaux (20) et des moyens de traitement (18, 19) reliés auxdits troisièmes moyens d'émission/réception (3, 17),
lesdits deuxièmes (5, 14, 15, 16) et troisièmes (3, 17) moyens d'émission/réception étant adaptés pour communiquer par signaux numériques.

2. Système selon la revendication 1, dans lequel lesdits moyens de traitement numérique du satellite (2) comprennent des moyens de filtrage numérique (12) adaptés pour filtrer des signaux numériques.

3. Système selon l'une des revendication précédentes, dans lequel lesdits moyens de traitement numérique du satellite (2) comprennent des moyens de compression (13) pour compresser des signaux numériques.

4. Système selon l'une des revendications précédentes, dans lequel lesdits moyens de traitement numérique du satellite (2) comprennent des moyens d'ajout (10) d'informations de multiplexage temporel aux signaux numérisés, et des moyens de multiplexage temporel (11) de signaux numériques.

5. Système selon la revendication 4, dans lequel lesdits moyens de traitement de la base de traitement au sol (4) comprennent des moyens de démultiplexage (19) de signaux numériques.

6. Système selon l'une des revendications 3 à 5, dans lequel lesdits moyens de traitement de la base de traitement au sol (4) comprennent des moyens de décompression (18) de signaux numériques.

7. Système selon l'une des revendications précédentes, dans lequel lesdits deuxièmes moyens d'émission/réception comprennent, en outre, un modulateur (14) pour moduler les signaux numériques.

8. Système selon la revendication 7, comprenant un démodulateur au sol (17) pour démoduler les signaux numériques reçus du satellite (2).

9. Système de formation de faisceaux à traitement fait au sol (1) comprenant un satellite (2) et une base de traitement au sol (4) équipée de moyens de formation de faisceaux (20), ledit satellite (2) étant équipé de premiers moyens d'émission/réception (6, 7, 32, 33) pour émettre et recevoir des signaux analogiques avec des terminaux distants (8), et de deuxièmes moyens d'émission/réception (5, 28) pour émettre et recevoir des signaux avec des troisièmes moyens d'émission/réception au sol (3, 25, 26, 27) communiquant avec ladite base de traitement (4), **caractérisé en ce que** :
le satellite (2) comprend :
- des moyens de conversion (31) adaptés pour convertir des signaux numériques reçus par les deuxièmes moyens d'émission/réception (5, 28) en des signaux analogiques, lesdits moyens de conversion (31) étant directement reliés aux premiers moyens d'émission/réception (6, 7, 32, 33), et
- des moyens de traitement numérique (29, 30) directement reliés aux moyens de conversion (31),
et **en ce que** la base de traitement (4) comprend des moyens de formation de faisceaux (20) et des moyens de traitement (21, 22, 23, 24) reliés auxdits troisièmes moyens d'émission/réception au sol (3, 25, 26, 27), lesdits deuxièmes (5, 28) et troisièmes (3, 25, 26, 27) moyens d'émission/réception étant adaptés pour communiquer par signaux numériques.

10. Système selon la revendication 9, dans lequel lesdits moyens de traitement de la base de traitement au sol (4) comprennent des moyens de filtrage numérique (23) adaptés pour filtrer des signaux numériques.

11. Système selon l'une des revendication 9 ou 10, dans lequel lesdits moyens de traitement de la base de traitement au sol (4) comprennent des moyens de compression (24) pour compresser des signaux numériques.

12. Système selon l'une des revendications 9 à 11, dans lequel lesdits moyens de traitement de la base de traitement au sol (4) comprennent des moyens d'ajout (21) d'informations de multiplexage temporel aux signaux numérisés, et des moyens de multiplexage temporel (22) de signaux numériques.

13. Système selon la revendication 12, dans lequel lesdits moyens de traitement numérique du satellite (2) comprennent des moyens de démultiplexage (30) de signaux numériques.

14. Système selon l'une des revendications 11 à 13, dans lequel lesdits moyens de traitement numérique du satellite (2) comprennent des moyens de décompression (29) des signaux numériques.

15. Système selon l'une des revendications 9 à 14, dans lequel lesdits troisièmes moyens d'émission/réception au sol comprennent un modulateur (25) pour moduler les signaux numériques.

16. Système selon la revendication 15, dans lequel lesdits deuxièmes moyens d'émission/réception comprennent un démodulateur (28) pour démoduler les signaux numériques reçus de la base de traitement au sol (4).

17. Système selon l'une des revendications précédentes, dans lequel lesdits terminaux distants (8) comprennent des téléphones portables ou des terminaux de télévision numérique.

18. Procédé de formation de faisceaux à traitement fait au sol **caractérisé en ce que** l'on convertit en signaux numériques des signaux analogiques reçus par un satellite (2) après émission par des terminaux distants (8), ladite conversion ayant lieu avant tout traitement ultérieur des signaux reçus, pour une transmission numérique du satellite à la station de base de traitement fait au sol.

19. Procédé de formation de faisceaux à traitement fait au sol **caractérisé en ce que** l'on convertit en signaux analogiques des signaux numériques reçus par un satellite (2) après émission par une base de traitement au sol (4), ladite conversion ayant lieu directement avant l'émission des signaux vers des terminaux distants, pour une transmission numérique de la station de base de traitement fait au sol vers le satellite.

## Claims

1. A beam forming system with ground based processing (1), comprising a satellite (2) and a ground based processing base station (4) fitted with beam forming means (20), said satellite (2) being fitted with first emitting/receiving means (6, 7) for emitting and receiving analogue signals with remote terminals (8), and second emitting/receiving means (5, 14, 15, 16) for emitting and receiving signals with ground based third emitting/receiving means (3, 17) communicating with said processing base station (4), **characterised in that**:
the satellite (2) comprises:
- digitisation means (9) that are designed to convert the analogue signals received by the first emitting/receiving means (6, 7) into digital signals, said digitisation means (9) being directly connected to the first emitting/receiving means (6, 7), and
- digital processing means (10, 11, 12, 13) directly connected to the digitisation means (9),
and **in that** the processing base station (4) comprises beam forming means (20) and processing means (18, 19) connected to said third emitting/receiving means (3, 17),
said second (5, 14, 15, 16) and third (3, 17) emitting/receiving means being designed to communicate by digital signals.

2. The system according to claim 1, wherein said digital processing means of the satellite (2) comprise digital filtering means (12) that are designed to filter digital signals.

3. The system according to any one of the preceding claims, wherein said digital processing means of the satellite (2) comprise compression means (13) for compressing digital signals.

4. The system according to any one of the preceding claims, wherein said digital processing means of the satellite (2) comprise means (10) for adding time multiplexing information to the digitised signals, and means (11) for time multiplexing digital signals.

5. The system according to claim 4, wherein said processing means of the ground based processing base station (4) comprise means (19) for demultiplexing digital signals.

6. The system according to any one of claims 3 to 5, wherein said processing means of the ground based processing base station (4) comprise means (18) for decompressing digital signals.

7. The system according to any one of the preceding claims, wherein said second emitting/receiving means further comprise a modulator (14) for modulating the digital signals.

8. The system according to claim 7, comprising a ground based demodulator (17) for demodulating the digital signals received from the satellite (2).

9. A beam forming system with ground based processing (1), comprising a satellite (2) and a ground based processing base station (4) fitted with beam forming means (20), said satellite (2) being fitted with first emitting/receiving means (6, 7, 32, 33) for emitting and receiving analogue signals with remote terminals (8), and second emitting/receiving means (5, 28) for emitting and receiving signals with third ground based emitting/receiving means (3, 25, 26, 27) communicating with said processing base station (4), **characterised in that**:
said satellite (2) comprises:
- conversion means (31) designed to convert the digital signals received by the second emitting/receiving means (5, 28) into analogue signals, said conversion means (31) being directly connected to the first emitting/receiving means (6, 7, 32, 33), and
- digital processing means (29, 30) directly connected to the conversion means (31),
and **in that** said processing base station (4) comprises beam forming means (20) and processing means (21, 22, 23, 24) connected to said third ground based emitting/receiving means on the ground (3, 25, 26, 27), said second (5, 28) and third (3, 25, 26, 27) emitting/receiving means being designed to communicate by digital signals.

10. The system according to claim 9, wherein said processing means of the ground based processing base station (4) comprise digital filtering means (23) that are designed to filter digital signals.

11. The system according to claim 9 or 10, wherein said processing means of the ground based processing base station (4) comprise compression means (24) for compressing digital signals.

12. The system according to any one of claims 9 to 11, wherein said processing means of the ground based processing base station (4) comprise means (21) for adding time multiplexing information to the digitised signals, and means (22) for time multiplexing digital signals.

13. The system according to claim 12, wherein said digital processing means of the satellite (2) comprise means (30) for demultiplexing digital signals.

14. The system according to any one of claims 11 to 13, wherein said digital processing means of the satellite (2) comprise means (29) for decompressing digital signals.

15. The system according to any one of claims 9 to 14, wherein said third ground based emitting/receiving means comprise a modulator (25) for modulating the digital signals.

16. The system according to claim 15, wherein said second emitting/receiving means comprise a demodulator (28) for demodulating the digital signals received from the ground based processing base station (4).

17. The system according to any one of the preceding claims, wherein said remote terminals (8) comprise mobile phones or digital television terminals.

18. A ground based beam forming method, **characterised in that**, after emission by remote terminals (8), analogue signals received by a satellite (2) are converted into digital signals, said conversion occurring before any subsequent processing of the received signals, for a digital transmission from the satellite to the ground based processing base station.

19. The ground based beam forming method, **characterised in that**, after emission by a ground based processing base station (4), the digital signals received by a satellite (2) are converted into analogue signals, said conversion occurring immediately before the emission of the signals to remote terminals, for a digital transmission from the ground based processing base station towards the satellite.

## Patentansprüche

1. Strahlenerzeugungssystem mit am Boden betriebener Verarbeitung (1), das einen Satelliten (2) und eine Verarbeitungsbasis (4) am Boden umfasst, die mit Strahlenerzeugungsmitteln (20) ausgestattet ist, wobei der Satellit (2) mit ersten Sende-/Empfangsmitteln (6, 7) zum Senden und Empfangen von analogen Signalen mit fernen Endgeräten (8) sowie mit zweiten Sende-/Empfangsmitteln (5, 14, 15, 16) zum Senden und Empfangen von Signalen mit dritten Sende-/Empfangsmitteln (3, 17) am Boden ausgestattet ist, die mit der Verarbeitungsbasis (4) kommunizieren, **dadurch gekennzeichnet, dass**:
der Satellit (2) Folgendes umfasst:
- Digitalisierungsmittel (9) zum Umwandeln der von den ersten Sende-/Empfangsmitteln (6, 7) empfangenen analogen Signale in digitale Signale, wobei die Digitalisierungsmittel (9) direkt mit den ersten Sende-/Empfangsmitteln (6, 7) verbunden sind, und
- Mittel (10, 11, 12, 13) zum digitalen Verarbeiten, die direkt mit den Digitalisierungsmitteln (9) verbunden sind,
und dadurch, dass die Verarbeitungsbasis (4) Strahlenerzeugungsmittel (20) und Verarbeitungsmittel (18, 19) umfasst, die mit den dritten Sende-/Empfangsmitteln (3, 17) verbunden sind,
wobei die zweiten (5, 14, 15, 16) und dritten (3, 17) Sende-/Empfangsmittel zum Kommunizieren durch digitale Signale ausgelegt sind.

2. System nach Anspruch 1, bei dem die digitalen Verarbeitungsmittel des Satelliten (2) digitale Filterungsmittel (12) zum Filtern der digitalen Signale umfassen.

3. System nach einem der vorherigen Ansprüche, bei dem die digitalen Verarbeitungsmittel des Satelliten (2) Kompressionsmittel (13) zum Komprimieren der digitalen Signale umfassen.

4. System nach einem der vorherigen Ansprüche, bei dem die digitalen Verarbeitungsmittel des Satelliten (2) Mittel (10) zum Hinzufügen von Zeitmultiplexinformationen zu den digitalen Signalen sowie Mittel zum Zeitmultiplexen (11) von digitalen Signalen umfassen.

5. System nach Anspruch 4, bei dem die Verarbeitungsmittel der Verarbeitungsbasis (4) am Boden Mittel (19) zum Demultiplexen von digitalen Signalen umfassen.

6. System nach einem der Ansprüche 3 bis 5, bei dem die Verarbeitungsmittel der Verarbeitungsbasis (4) am Boden Mittel (18) zum Dekomprimieren von digitalen Signalen umfassen.

7. System nach einem der vorherigen Ansprüche, bei dem die zweiten Sende-/Empfangsmittel darüber hinaus einen Modulator (14) zum Modulieren der digitalen Signale umfassen.

8. System nach Anspruch 7, das einen Demodulator (17) am Boden zum Demodulieren der vom Satelliten (2) empfangenen digitalen Signale umfasst.

9. Strahlenerzeugungssystem mit am Boden betriebener Verarbeitung (1), das einen Satelliten (2) und eine Verarbeitungsbasis (4) am Boden umfasst, die mit Strahlenerzeugungsmitteln (20) ausgestattet ist, wobei der Satellit (2) mit ersten Sende-/Empfangsmitteln (6, 7, 32, 33) zum Senden und Empfangen von analogen Signalen mit fernen Endgeräten (8) sowie mit zweiten Sende-/Empfangsmitteln (5, 28) zum Senden und Empfangen von Signalen mit dritten Sende-/Empfangsmitteln (3, 25, 26, 27) am Boden ausgestattet ist, die mit der Verarbeitungsbasis (4) kommunizieren, **dadurch gekennzeichnet, dass**:
der Satellit (2) Folgendes umfasst:
- Konvertierungsmittel (31) zum Konvertieren der von den zweiten Sende-/Empfangsmitteln (5, 28) empfangenen digitalen Signale in analoge Signale, wobei die Konvertierungsmittel (31) direkt mit den ersten Sende-/Empfangsmitteln (6, 7, 32, 33) verbunden sind, und
- digitale Verarbeitungsmittel (29, 30), die direkt mit den Konvertierungsmitteln (31) verbunden sind,
und dadurch, dass die Verarbeitungsbasis (4) Strahlenerzeugungsmittel (20) und Verarbeitungsmittel (21, 22, 23, 24) umfasst, die mit den dritten Sende-/Empfangsmitteln (3, 25, 26, 27) am Boden verbunden sind, wobei die zweiten (5, 28) und dritten (3, 25, 26, 27) Sende-/Empfangsmittel zum Kommunizieren durch digitale Signale ausgelegt sind.

10. System nach Anspruch 9, bei dem die Verarbeitungsmittel der Verarbeitungsbasis (4) am Boden digitale Filterungsmittel (23) zum Filtern von digitalen Signale umfassen.

11. System nach Anspruch 9 oder 10, bei dem die Verarbeitungsmittel der Verarbeitungsbasis (4) am Boden Kompressionsmittel (24) zum Komprimieren der digitalen Signale umfassen.

12. System nach einem der Ansprüche 9 bis 11, bei dem die Verarbeitungsmittel der Verarbeitungsbasis (4) am Boden Mittel (21) zum Hinzufügen von Zeitmultiplexinformationen zu den digitalen Signalen und Mittel (22) zum Zeitmultiplexen von digitalen Signalen umfassen.

13. System nach Anspruch 12, bei dem die digitalen Verarbeitungsmittel des Satelliten (2) Mittel (30) zum Demultiplexen von digitalen Signalen umfassen.

14. System nach einem der Ansprüche 11 bis 13, bei dem die digitalen Verarbeitungsmittel des Satelliten (2) Mittel (29) zum Dekomprimieren der digitalen Signalen umfassen.

15. System nach einem der Ansprüche 9 bis 14, bei dem die dritten Sende-/Empfangsmittel am Boden einen Modulator (25) zum Modulieren der digitalen Signale umfassen.

16. System nach Anspruch 15, bei dem die zweiten Sende-/Empfangsmittel einen Demodulator (28) zum Demodulieren der von der Verarbeitungsbasis (4) am Boden empfangenen digitalen Signale umfassen.

17. System nach einem der vorherigen Ansprüche, bei dem die fernen Endgeräte (8) Mobiltelefone oder digitale Fernsehendgeräte umfassen.

18. Verfahren zur Strahlenerzeugung mit am Boden betriebener Verarbeitung, **dadurch gekennzeichnet, dass** von einem Satelliten (2) empfangene analoge Signale nach dem Senden durch ferne Endgeräte (8) in digitale Signale umgewandelt werden, wobei die Umwandlung vor jeglicher späteren Verarbeitung der empfangenen Signale für eine digitale Übertragung vom Satelliten zu der am Boden betriebenen Basisstation erfolgt.

19. Verfahren zur Strahlenerzeugung mit am Boden betriebener Verarbeitung, **dadurch gekennzeichnet, dass** von einem Satelliten (2) empfangene digitale Signale nach dem Senden durch eine Verarbeitungsbasis (4) am Boden in analoge Signale umgewandelt werden, wobei die Umwandlung direkt vor dem Senden der Signale zu fernen Endgeräten erfolgt, für eine digitale Übertragung der Verarbeitungsbasisstation am Boden zum Satelliten.
